# EUROPEAN PATENT APPLICATION

(11) **EP 4 583 175 A1**
(43) Date of publication of application: **09.07.2025**
(21) Application number: 23859973.2
(22) Date of filing: 04.08.2023
(51) Int. Cl.: H01M 4/02, H01G 2/24, H01G 11/70, H01G 11/74, H01M 10/04, H01M 10/058, H01M 50/531, H01M 50/536

(54) **ELECTRODE PLATE AND BATTERY**

(30) Priority: 30.08.2022 JP 2022136633
(71) Applicant: Panasonic Energy Co., Ltd., Osaka 570-8511 (JP)
(72) Inventor: ISHIKAWA, Toshiki, Kadoma-shi, Osaka 571-0057 (JP); DAVIS, Jerome, Kadoma-shi, Osaka 571-0057 (JP)
(74) Representative: Eisenführ Speiser
(86) International application number: PCT/JP2023/028601
(87) International publication number: WO 2024/048205

(57) **Abstract**

A cylindrical battery (10) which is one example of an embodiment of the present invention comprises, as an electrode plate, an electrode (14) that includes a positive electrode plate (11) and a negative electrode plate (12). The electrode plate includes: a core; a mix layer which is formed on the core; a lead which is connected to an exposed section of the core at which the surface thereof is exposed; and an identification display. In the exposed section, at least a part of the identification display is formed within a projection range in which the contour of the lead is projected.

## Description

### TECHNICAL FIELD

The present disclosure relates to an electrode plate and a battery.

### BACKGROUND ART

Conventionally known is an electrode plate provided with an identification mark (for example, see PATENT LITERATURES 1 and 2). The identification mark makes it possible to specify production lines, production date, and the like of the electrode plate. If a failure occurs for some reason in a process of producing a battery or after shipment of a battery, for example, the identification mark of the electrode plate is used to analyze a cause of the failure.

PATENT LITERATURE 1 discloses that an identification mark is provided on at least one of a positive electrode lead, a negative electrode lead, a core exposed portion of a positive electrode, and a core exposed portion of a negative electrode. PATENT LITERATURE 2 discloses that an identification mark is provided on a core exposed portion, and a mixture layer is provided on a core surface on an opposite side in a core thickness direction of a core from the identification mark.

### CITATION LIST

### PATENT LITERATURE

PATENT LITERATURE 1: Japanese Unexamined Patent Application Publication No. 2006-040875
PATENT LITERATURE 2: International Publication No. WO 2019/193869

### SUMMARY

As a result of studies by the present inventors, it has been found that in a case where the identification mark is provided on the core exposed portion of the electrode plate as disclosed in PATENT LITERATURES 1 and 2, because of low stiffness of the core exposed portion, the identification mark is deformed by a tensile force acting on the exposed portion during the charging and discharging of the battery. If the identification mark is deformed, it may be difficult to read the mark. A lead has a higher stiffness than that of the core exposed portion, thereby making it difficult to cause deformation during the charging and discharging, meanwhile the width of the lead is generally small, thereby making it difficult to provide the identification mark on the lead surface.

An electrode plate according to the present disclosure has a core, and a mixture layer formed on the core, and is provided with an exposed portion where a surface of the core is exposed, the electrode plate having a lead joined to the exposed portion, and an identification mark. At least a part of the identification mark is formed in a projection range in which an outline of the lead is projected, in the exposed portion.

A battery according to the present disclosure comprises an electrode assembly that includes the above-described electrode plate, and an exterior housing body that houses the electrode assembly.

The electrode plate according to the present disclosure makes it possible to reduce deformation of the identification mark caused by use of the electrode plate. This makes it difficult to cause a reading error of the identification mark.

### BRIEF DESCRIPTION OF DRAWINGS

FIG. 1 is a sectional view of a cylindrical battery, which is one example of an embodiment.
FIG. 2 is a front view of a positive electrode plate, which is one example of the embodiment, and a diagram illustrating a positive electrode lead and a portion near the positive electrode lead.
FIG. 3 is a front view of a negative electrode plate, which is one example of the embodiment, and a diagram illustrating a negative electrode lead and a portion near the negative electrode lead.
FIG. 4 is a diagram illustrating a modified example of an electrode plate.
FIG. 5 is a diagram illustrating a modified example of the electrode plate.
FIG. 6 is a drawing illustrating producing processes of the electrode plate, which is one example of the embodiment.

### DESCRIPTION OF EMBODIMENTS

Hereinafter, one example of an embodiment of an electrode plate according to the present disclosure, and a battery using the electrode plate will be described in detail with reference to the drawings. The embodiment described below is only an example, and the present disclosure is not limited to the embodiment described below. Forms obtained by selectively combining each component of the embodiment described below are included in the present disclosure.

Hereinafter, a cylindrical battery 10 in which a wound electrode assembly 14 is housed in a bottomed cylindrical exterior housing can 16 is illustrated, but an exterior housing body of the battery is not limited to the cylindrical exterior housing can. The battery according to the present disclosure may be, for example, a prismatic battery comprising a rectangular exterior housing can or a coin type battery comprising a coin-shaped exterior housing can, or may be a pouch type battery comprising an exterior housing body formed of a laminate sheet including a metal layer and a resin layer. Note that the cylindrical battery 10 of the present embodiment is a secondary battery, but the electrode plate according to the present disclosure can be applied to a power storage device other than the secondary battery, such as a primary battery and a capacitor.

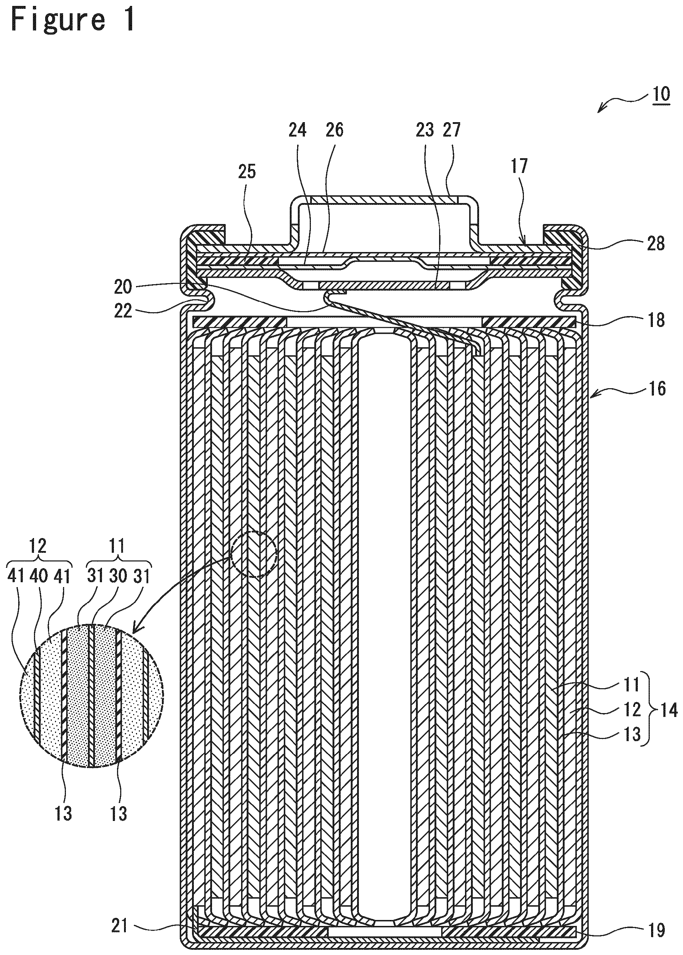

FIG. 1 is a diagram schematically illustrating an axial cross section of the cylindrical battery 10, which is one example of the embodiment. As illustrated in FIG. 1, the cylindrical battery 10 comprises the electrode assembly 14, an electrolyte, and the exterior housing can 16 that houses the electrode assembly 14 and the electrolyte. The electrode assembly 14 has a positive electrode plate 11, a negative electrode plate 12, and a separator 13, and has a wound structure in which the positive electrode plate 11 and the negative electrode plate 12 are spirally wound with the separator 13 interposed therebetween. The exterior housing can 16 is a bottomed cylindrical metallic container in which one side in an axial direction is open, and an opening of the exterior housing can 16 is capped with a sealing assembly 17. Hereinafter, for convenience of description, the sealing assembly 17 side of the cylindrical battery 10 will be described as an "upper side", and a bottom side of the exterior housing can 16 will be described as a "lower side".

The electrolyte may be an aqueous electrolyte, but a non-aqueous electrolyte shall be used in the present embodiment. The non-aqueous electrolyte includes a non-aqueous solvent, and an electrolyte salt dissolved in the non-aqueous solvent. For the non-aqueous solvent, esters, ethers, nitriles, amides, and mixed solvents containing two or more selected from the foregoing may be used, for example. Examples of non-aqueous solvent include ethylene carbonate (EC), ethyl methyl carbonate (EMC), dimethyl carbonate (DMC), diethyl carbonate (DEC), and mixed solvents thereof. The non-aqueous solvent may contain a halogen-substituted product (for example, fluoroethylene carbonate) obtained by substituting at least some of hydrogen atoms in these solvents with a halogen atom such as fluorine. As the electrolyte salt, a lithium salt such as LiPF₆ is used.

Any of the positive electrode plate 11, the negative electrode plate 12, and the separator 13 constituting the electrode assembly 14 is a band-shaped elongated member, and spirally wound to be alternately stacked in the radial direction of the electrode assembly 14. The negative electrode plate 12 is formed to be one size larger than the positive electrode plate 11 in order to prevent precipitation of lithium. That is, the negative electrode plate 12 is formed to be longer in the longitudinal direction and the width direction (short direction) than the positive electrode plate 11. The two separators 13 are each formed to be at least one size larger than the positive electrode plate 11, and are disposed so as to interpose the positive electrode plate 11 therebetween.

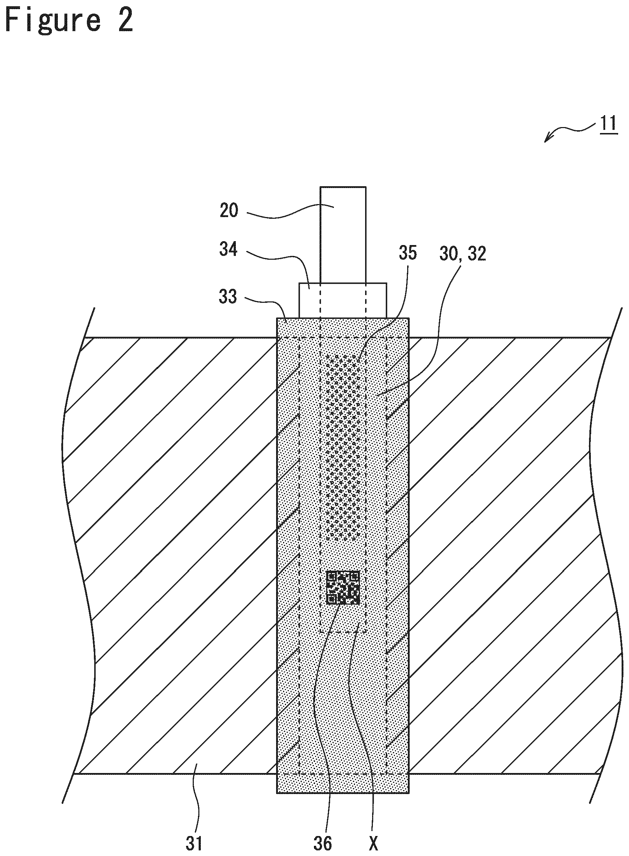

The positive electrode plate 11 has a positive electrode core 30 and a positive electrode mixture layer 31 formed on each surface of the positive electrode core 30. For the positive electrode core 30, a foil of a metal, such as aluminum or an aluminum alloy, which is stable within a potential range of the positive electrode plate 11, a film in which such a metal is disposed on a surface layer thereof, and the like may be used. The positive electrode mixture layer 31 includes a positive electrode active material, a conductive agent such as carbon black, or a carbon nanotube, and a binder such as polyvinylidene fluoride, and is preferably formed on each surface of the positive electrode core 30 except for an exposed portion 32 (see FIG. 2) to be described later. The positive electrode plate 11 is produced by: applying a positive electrode mixture slurry including the positive electrode active material, the conductive agent, and the binder on each surface of the positive electrode core 30; and compressing the resulting coating film.

Examples of the positive electrode active material included in the positive electrode mixture layer 31 include a lithium-transition metal composite oxide. The lithium-transition metal composite oxide is a composite oxide containing metal elements such as Co, Mn, Ni, and Al in addition to Li. A metal element contained in the composite oxide is, for example, at least one selected from Mg, Al, Ca, Sc, Ti, V, Cr, Mn, Fe, Co, Ni, Cu, Zn, Ga, Ge, Y, Zr, Sn, Sb, W, Pb, and Bi. Among these elements, at least one selected from Ni, Mn, and Co is preferably contained.

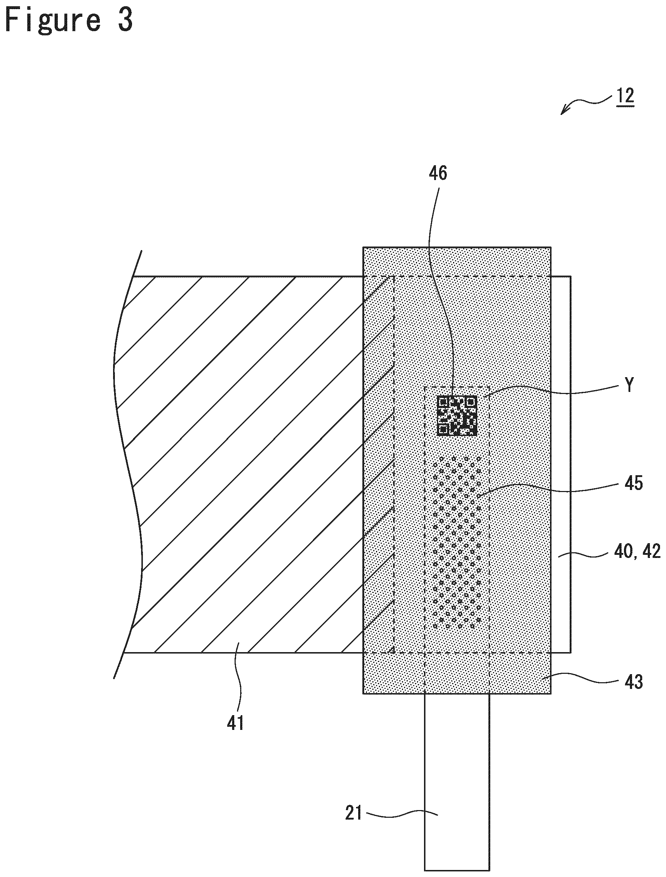

The negative electrode plate 12 has a negative electrode core 40 and a negative electrode mixture layer 41 formed on each surface of the negative electrode core 40. For the negative electrode core 40, a foil of a metal, such as copper or a copper alloy, which is stable within a potential range of the negative electrode plate 12, a film in which such a metal is disposed on a surface layer thereof, and the like may be used. The negative electrode mixture layer 41 includes a negative electrode active material, a binder, and, as necessary, a conductive agent such as carbon black or a carbon nanotube, and is preferably formed on each surface of the negative electrode core 40 except for an exposed portion 42 (see FIG. 3) to be described later. For the binder, for example, a styrene-butadiene rubber (SBR) may be used, and carboxymethyl cellulose or a salt thereof, or the like may be used in combination therewith. The negative electrode plate 12 is produced by: applying a negative electrode mixture slurry including the negative electrode active material and the binder on each surface of the negative electrode core 40; and compressing the resulting coating film.

Examples of the negative electrode active material included in the negative electrode mixture layer 41 include carbon materials such as graphite that reversibly occlude and release lithium ions. The graphite may be any of natural graphite and artificial graphite. For the negative electrode active material, an element that forms an alloy with Li such as Si and Sn, and a material containing the element may be used. Among them, a composite material containing Si is preferably used. A preferable example of the composite material containing Si includes a material including a fine Si phase dispersed in an SiO₂ phase, a silicate phase such as lithium silicate, a carbon phase, or a silicide phase.

For the separator 13, a porous sheet having ion permeability and an insulation property is used. Specific examples of the porous sheet include a microporous thin film, a woven fabric, and a nonwoven fabric. Suitable examples of a material for the separator 13 include a polyolefin such as polyethylene or polypropylene, or a cellulose. The separator 13 may have either a single-layer structure or a multi-layer structure. The separator 13 may have a high heat resistant resin layer such as aramid resin formed on its surface. At least one of interfaces between the separator 13 and the positive electrode plate 11 and between the separator 13 and the negative electrode plate 12 may have a filler layer that contains an inorganic compound filler.

Insulating plates 18 and 19 are disposed on the upper and lower sides of the electrode assembly 14, respectively. In the example illustrated in FIG. 1, a positive electrode lead 20 extends toward the sealing assembly 17 through a through hole in the insulating plate 18, and a negative electrode lead 21 extends toward the bottom side of the exterior housing can 16 through the outside of the insulating plate 19. The positive electrode lead 20 is connected to a lower surface of an internal terminal plate 23 of the sealing assembly 17, by means of laser welding or the like, and a cap 27 which is a top plate of the sealing assembly 17 electrically connected to the internal terminal plate 23 serves as a positive electrode terminal. The negative electrode lead 21 is connected to a bottom inner surface of the exterior housing can 16, by means of laser welding or the like, and the exterior housing can 16 serves as a negative electrode terminal.

The positive electrode lead 20 is connected to the positive electrode core 30, by means of ultrasonic welding or the like. The positive electrode lead 20 is joined to a longitudinal center portion away from both ends of the positive electrode plate 11 in the longitudinal direction, for example. The positive electrode lead 20 may be joined to a position that is substantially equally distant from both ends of the positive electrode plate 11 in the longitudinal direction. The negative electrode lead 21 is connected to the negative electrode core 40, by means of ultrasonic welding or the like. In the example illustrated in FIG. 1, the negative electrode lead 21 is joined to an end portion of the negative electrode plate 12 in the longitudinal direction that is located on an outer circumferential side of the electrode assembly 14. The positive electrode lead 20 and the negative electrode lead 21 each are, for example, a band-shaped metallic member, and have a thickness of greater than or equal to 30 µm and less than or equal to 100 µm.

The negative electrode plate 12 may be disposed on the outer circumferential surface of the electrode assembly 14. In addition, an exposed portion where a surface of the negative electrode core 40 is exposed may be formed on the outer circumferential surface of the electrode assembly 14, and the exposed portion may contact an inner surface of the exterior housing can 16 so that the negative electrode plate 12 and the exterior housing can 16 are electrically connected to each other. In this case, the negative electrode plate 12 need not have the negative electrode lead 21, and need not have an identification mark 46 to be described later.

The exterior housing can 16 is a bottomed cylindrical metallic container in which one side in an axial direction is open, as described above. A gasket 28 is provided between the exterior housing can 16 and the sealing assembly 17 to achieve the sealability inside the battery and the insulation property between the exterior housing can 16 and the sealing assembly 17. The exterior housing can 16 has a grooved portion 22 for supporting the sealing assembly 17, the grooved portion 22 being formed by a part of a side wall projecting inward. The grooved portion 22 is preferably formed in an annular shape along a circumferential direction of the exterior housing can 16 and supports the sealing assembly 17 on an upper surface of the grooved portion 22. The sealing assembly 17 is fixed to an upper portion of the exterior housing can 16 by the grooved portion 22, and an opening end of the exterior housing can 16 caulked to the sealing assembly 17.

The sealing assembly 17 has a stacked structure of the internal terminal plate 23, a lower vent member 24, an insulating member 25, an upper vent member 26, and the cap 27 in this order from the electrode assembly 14 side. Each member constituting the sealing assembly 17 has, for example, a disk shape or a ring shape, and each member except for the insulating member 25 is electrically connected to each other. The lower vent member 24 and the upper vent member 26 are connected to each other at respective center portions, and the insulating member 25 is interposed between the circumferential edge portions of the vent members 24 and 26. If an abnormality occurs in the battery and the internal pressure of the battery increases, the lower vent member 24 is deformed to push up the upper vent member 26 toward the cap 27 side and breaks, resulting in cutting off of a current pathway between the lower vent member 24 and the upper vent member 26. If the internal pressure further increases, the upper vent member 26 breaks, and gas is discharged through an opening of the cap 27.

Hereinafter, the positive electrode plate 11 and the negative electrode plate 12 will be described in detail with reference to FIGS. 2 and 3. In FIGS. 2 and 3, the mixture layer is indicated by hatching lines, and tapes 33 and 43 are indicated by dot hatching. As described above, the positive electrode plate 11 has the positive electrode core 30, and the positive electrode mixture layer 31 formed on each surface of the positive electrode core 30. Similarly, the negative electrode plate 12 has the negative electrode core 40, and the negative electrode mixture layer 41 formed on each surface of the negative electrode core 40.

As illustrated in FIG. 2, the positive electrode plate 11 has the exposed portion 32 formed in which a surface of the positive electrode core 30 is exposed. The exposed portion 32 is formed in which the positive electrode mixture slurry is not applied on the positive electrode core 30 so that the positive electrode mixture layer 31 is not provided. Alternatively, the exposed portion 32 may be formed by peeling a part of the positive electrode mixture layer 31. In the present embodiment, the exposed portion 32 is formed at one position of a center portion of the positive electrode plate 11 in the longitudinal direction. Note that the position where the exposed portion 32 is formed is not limited to the center portion of the positive electrode plate 11 in the longitudinal direction, and for example, the exposed portion 32 may be formed at each of a plurality of positions spaced from each other in the longitudinal direction.

Although details will be described later, the positive electrode plate 11 has the positive electrode lead 20 joined to the exposed portion 32, and the identification mark 36, and at least a part of the identification mark 36 is formed in a projection range X in which an outline of the positive electrode lead 20 is projected, in the exposed portion 32. In a case where a plurality of exposed portions 32 are formed and one positive electrode lead 20 is joined to each of the exposed portions 32, it is sufficient that the identification mark 36 is formed on any one of the exposed portions 32, but the identification mark 36 may be also formed on each of a plurality of exposed portions 32 or all the exposed portions 32.

The exposed portion 32 preferably includes a first surface to which the positive electrode lead 20 is to be joined, and a second surface opposite to the first surface. That is, the positive electrode lead 20 is joined only to one surface of the positive electrode core 30, and the exposed portion 32 is formed on the other surface on which the positive electrode lead 20 is not disposed. The second surface of the exposed portion 32 is formed at least within the projection range X of the positive electrode lead 20, and is preferably formed to overlap with the first surface in the thickness direction of the positive electrode plate 11 at substantially the same size as the first surface.

The exposed portion 32 may be formed so as to have a length that is short of extending from one end to the other end of the positive electrode plate 11 in the width direction, but in the example illustrated in FIG. 2, the exposed portion 32 is formed over the entire length in the width direction. The exposed portion 32 is formed to be wider than the positive electrode lead 20. The width of the exposed portion 32 is, for example, constant over the entire length, and is greater than or equal to 1.5 times and less than or equal to 2.0 times the width of the positive electrode lead 20. In this case, the high capacity can be maintained without causing any trouble in joining of the positive electrode lead 20. An example of the width of the exposed portion 32 is greater than or equal to 5 mm and less than or equal to 8 mm.

A joint portion 35 with the positive electrode lead 20 is formed on the exposed portion 32. On the first surface of the exposed portion 32, the positive electrode lead 20 is disposed to extend from one end to a predetermined position of the positive electrode plate 11 in the width direction. The predetermined position is, for example, between the center and the other end (lower end) of the positive electrode plate 11 in the width direction. The joint portion 35 is a portion where the positive electrode lead 20 is joined to the exposed portion 32, and is formed in a part of the projection range X which is a region where the positive electrode lead 20 is disposed in the first surface of the exposed portion 32. The joint portion 35 is formed, for example, by means of ultrasonic welding. In this case, in the joint portion 35, a fine recess is formed which is a trace of an ultrasonic horn. In the projection range X of the present embodiment, the joint portion 35 and the identification mark 36 are formed.

A tape 33 that covers the positive electrode lead 20 is provided in the positive electrode plate 11. The tape 33 preferably covers the positive electrode lead 20, the exposed portion 32, and a region adjacent to the exposed portion 32 in the positive electrode mixture layer 31. In addition, the tape 33 preferably covers the entirety of the exposed portion 32 including a region in which the positive electrode lead 20 is present, is formed in a strip shape to be one size larger than the exposed portion 32, and is provided to protrude from the exposed portion 32 in the longitudinal direction and the width direction of the positive electrode plate 11. The tape 33 is preferably provided on each surface of the positive electrode core 30. In a part of the positive electrode lead 20 extending from an upper portion of the exposed portion 32, a tape 34 is preferably provided in at least a range facing the negative electrode plate 12 via the separator 13.

The tape 33 has, for example, a substrate formed from insulating resin, and an adhesive layer formed on one surface of the substrate. Note that the same one as the tape 33 can be used for the tape 34. The tape 33 is preferably an insulating tape substantially having no electrical conductivity. The tape 33 may have a layer structure including at least three layers, and the substrate may be formed of at least two layers of film of the same material or different materials. The tape 33 may contain an inorganic filler such as titania, alumina, silica, or zirconia, and may preferably have a light-transmitting property to an extent that the identification mark 36 is readable through the tape 33. The tape 33 may be colored transparent or colorless transparent.

Examples of resin forming the substrate of the tape 33 include a polyester such as poly ethylene terephthalate (PET), a polypropylene (PP), a polyimide (PI), a poly phenylene sulfide (PPS), a poly ether imide (PEI), and a polyamide. The adhesive layer is formed, for example, by applying an adhesive on one surface of the substrate. Although the adhesive forming the adhesive layer may be either a hot melt type which exhibits an adhesive property by heating or a thermosetting type which is cured by heating, in consideration of productivity and the like, an adhesive having an adhesive property at room temperature is preferable. Examples of the adhesive forming the adhesive layer include an acrylic-based adhesive and a synthetic rubber-based adhesive.

As described above, the identification mark 36 is formed on the exposed portion 32. The identification mark 36 is an individual mark attached to the positive electrode plate 11, and provides identification information for differentiating it from another positive electrode plate 11. The identification marks 36 are provided to be different for each of the positive electrode plates 11 or for each group including a predetermined number of positive electrode plates 11. The identification mark 36 may indicate a lot number assigned to a group of products that are produced at the same timing using the same material or may indicate a product number assigned to each product.

The identification marks 36 can differentiate among individual positive electrode plates 11 or individual production lots, and are used to acquire the information about the production of the positive electrode plate 11. For example, a producer of a positive electrode plate 11 has a database including the information about the production of the positive electrode plate 11, the information being associated with the identification mark 36 of the positive electrode plate 11. Therefore, the identification mark 36 is read by a reading device such as a reader to specify the positive electrode plate 11, thereby making it possible to acquire the information about the production of the positive electrode plate 11. Examples of the information about the production of the positive electrode plate 11 include production process history records including the information such as a production line and production date.

The identification mark 36 is formed of at least one selected from numbers, characters, and identification codes, for example. The identification mark 36 may be a mark formed of a combination of numbers and characters. The identification code included in the identification mark 36 may be any of a one-dimensional code, a two-dimensional code, and a three-dimensional code, but is preferably a two-dimensional code. In the example illustrated in FIG. 2, a square two-dimensional code (QR code) (registered trademark)) is formed as the identification mark 36.

It is sufficient that the identification mark 36 is readable using the reading device such as a reader, or the identification mark 36 may be formed of at least one selected from a protrusion, a recess, and a through hole. Alternatively, the identification mark 36 has a different color from the surrounding area. The numbers, characters, or identification codes forming the identification mark 36 have no protrusion, recess, or through hole, and only the color thereof may be different from the surrounding color.

The identification mark 36 may be formed by printing such as inkjet printing or by pressing, and is preferably formed by laser marking. The laser marking is a method of forming a mark by irradiating the exposed portion 32 with laser light. In a case where the identification mark 36 is formed by laser marking, a portion irradiated with laser light is discolored to form the mark, for example. In addition, a recess or through hole may be formed in the portion irradiated with laser light. Since the mark formed by laser marking is excellent in durability, a reading error is hard to occur even after the use of the positive electrode plate 11.

As described above, at least a part of the identification mark 36 is formed in the projection range X in which an outline of the positive electrode lead 20 is projected, in the exposed portion 32. That is, at least a part of the identification mark 36 is formed in a range overlapping with the positive electrode lead 20 in the thickness direction of the positive electrode plate 11. Since the positive electrode lead 20 has a larger thickness and a higher stiffness than the positive electrode core 30, the projection range X of the exposed portion 32 joined to the positive electrode lead 20 is unlikely to be deformed than the other portions of the exposed portion 32 during the charging and discharging of the battery. Therefore, providing the identification mark 36 on the projection range X overlapping with the positive electrode lead 20 makes it possible to effectively reduce the deformation of the identification mark 36 during the charging and discharging, and to be unlikely to cause a reading error of the identification mark 36.

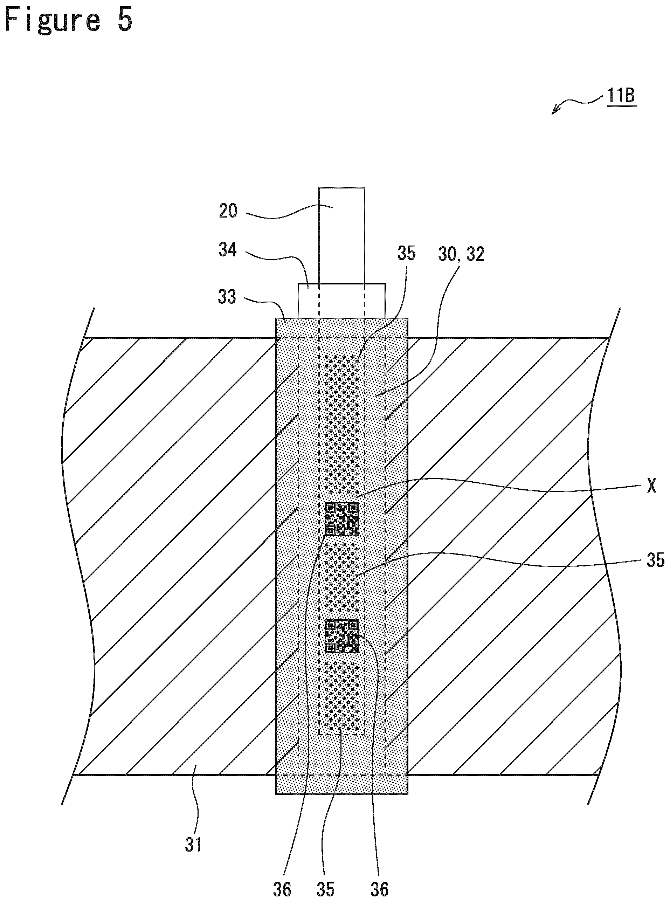

Although a part of the identification mark 36 may protrude from the projection range X of the exposed portion 32, the entirety of the identification mark 36 is preferably formed in the projection range X. In this case, the effect of reducing the deformation of the identification mark 36 is more remarkably obtained. In addition, the identification mark 36 is preferably formed not to overlap with the circumferential edge of the projection range X. As illustrated in FIG. 5 to be described later, a plurality of identification marks 36 may be formed, but in this case, the entirety of all the identification marks 36 is preferably formed in the projection range X.

In addition, the identification mark 36 is more preferably formed in a range not overlapping with the joint portion 35 in the thickness direction of the positive electrode plate 11. Forming the identification mark 36 while avoiding the joint portion 35 can prevent a reading error of the identification mark 36 from occurring due to an influence of the joint portion 35. In a case where the joint portion 35 is particularly formed by means of ultrasonic welding, a trace of the ultrasonic horn which may affect reading of the mark remains in the joint portion 35, and therefore, the identification mark 36 is preferably formed not to overlap with the joint portion 35 in the projection range X.

In the projection range X of the exposed portion 32, the identification mark 36 is disposed in close proximity to the joint portion 35. In the example illustrated in FIG. 2, the projection range X has a rectangular shape which is long in the width direction of the positive electrode plate 11 in a front view, and the joint portion 35 and the identification mark 36 are arranged in close proximity to each other in the longitudinal direction of the projection range X. The joint portion 35 is not formed in a predetermined length range from a lower end of the projection range X, and the identification mark 36 is formed not to protrude from the projection range X. The predetermined length is preferably less than 50% of the length of the projection range X, and is, for example, greater than or equal to 15% and less than or equal to 30%. An interval between the joint portion 35 and the identification mark 36 is, for example, greater than or equal to 5% and less than or equal to 15% of the projection range X.

In one example of the embodiment, the identification mark 36 is formed on at least the first surface of the exposed portion 32. Since the first surface of the exposed portion 32 is a surface on which the positive electrode lead 20 is disposed, in a case where the identification mark 36 is formed on the first surface, the identification mark 36 is covered by the positive electrode lead 20 and is in a state of being hidden by the positive electrode lead 20. Furthermore, since the tape 33 is provided on the positive electrode lead 20, the identification mark 36 is covered by the tape 33 and the positive electrode lead 20. In this case, for example, the identification mark 36 is read by turning at least a part of the tape 33 and the positive electrode lead 20, but since the identification mark 36 is covered by the positive electrode lead 20, there is an advantage in that the identification mark 36 is unlikely to deteriorate even when the positive electrode plate 11 is used for a long period of time.

In another example of the embodiment, the identification mark 36 is formed on at least the second surface of the exposed portion 32. Although the positive electrode lead 20 is not present on the second surface, the tape 33 is also attached to the second surface, and therefore, the identification mark 36 is in a state of being covered and protected by the tape 33. In this case, if the tape 33 is transparent, the identification mark 36 can be read via the tape 33. Also in the second surface, the entirety of the identification mark 36 is preferably formed in the projection range X of the positive electrode lead 20. In addition, the identification mark 36 is preferably formed in a range not overlapping with the joint portion 35 in the thickness direction of the positive electrode plate 11.

The identification mark 36 may be formed only on the first surface or only on the second surface of the exposed portion 32, or may be formed on each surface of the exposed portion 32. In a case where the identification mark 36 is formed on each surface of the exposed portion 32, for example, at least parts of respective identification marks 36 overlap with each other in the thickness direction of the positive electrode plate 11.

As illustrated in FIG. 3, the negative electrode plate 12 has the exposed portion 42 formed in which a surface of the negative electrode core 40 is exposed. The exposed portion 42 is formed in which the negative electrode mixture slurry is not applied on the negative electrode core 40 so that the negative electrode mixture layer 41 is not provided. Alternatively, the exposed portion 42 may be formed by peeling a part of the negative electrode mixture layer 41. In the present embodiment, the exposed portion 42 is formed at one position of an end portion of the negative electrode plate 12 in the longitudinal direction that is located on the outer circumferential side of the electrode assembly 14. Note that the position where the exposed portion 42 is formed is not limited to the end portion of the negative electrode plate 12 in the longitudinal direction, and for example, the exposed portion 42 may be formed at each of a plurality of positions spaced from each other in the longitudinal direction.

The negative electrode plate 12 has the negative electrode lead 21 joined to the exposed portion 42, and the identification mark 46, and at least a part of the identification mark 46 is formed in a projection range Y in which an outline of the negative electrode lead 21 is projected, in the exposed portion 42, in the same manner as in the positive electrode plate 11. In a case where a plurality of exposed portions 42 are formed and one negative electrode lead 21 is joined to each of the exposed portions 42, it is sufficient that the identification mark 46 is formed on any one of the plurality of exposed portions 42, but the identification mark 46 may be also formed on each of a plurality of exposed portions 42 or all the exposed portions 42.

The exposed portion 42 preferably includes a first surface to which the negative electrode lead 21 is to be joined, and a second surface opposite to the first surface, in the same manner as in the exposed portion 32 of the positive electrode plate 11. The exposed portion 42 is formed from one end of the negative electrode plate 12 in the longitudinal direction, to be wider than the exposed portion 32. In addition, a tape 43 is provided on the negative electrode plate 12, to cover the negative electrode lead 21, the exposed portion 42, and a region adjacent to the exposed portion 42 in the negative electrode mixture layer 41. Note that the tape 43 need not cover the entirety of the exposed portion 42. The same one as the tape 33 of the positive electrode plate 11 can be used for the tape 43.

Since the same configuration as that of the identification mark 36 of the positive electrode plate 11 can be applied to the identification mark 46, the description of the identification mark 36 can be applied. The entirety of the identification mark 46 is preferably formed in the projection range Y of the exposed portion 42. In addition, the identification mark 46 is preferably formed in a range not overlapping with a joint portion 45 of the negative electrode lead 21 in at least one of the first surface and the second surface of the exposed portion 42.

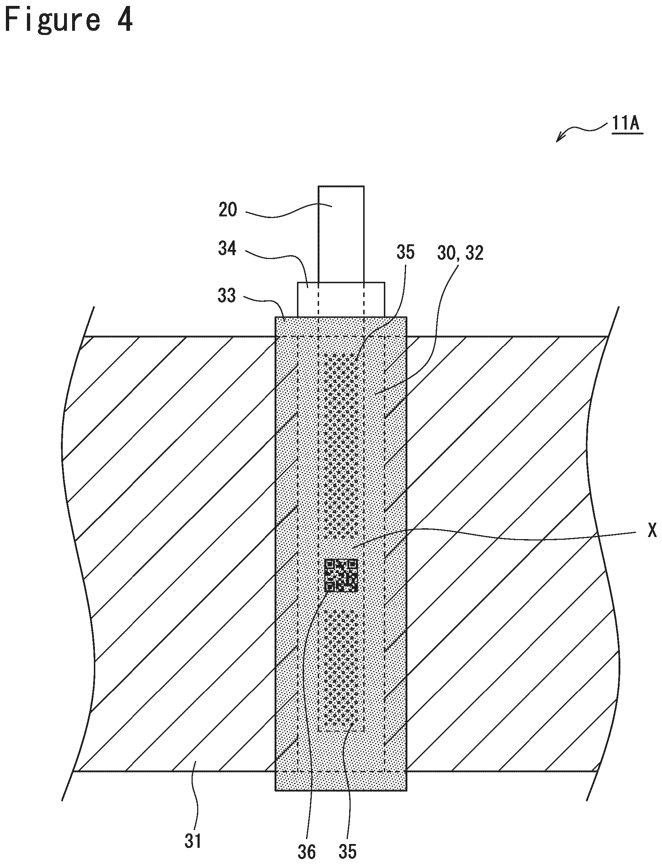

FIGS. 4 and 5 each are a diagram illustrating a modified example of the positive electrode plate 11 (positive electrode plates 11A and 11B). Note that the configuration of the modified example may be applied to the negative electrode plate 12.

The positive electrode plate 11A illustrated in FIG. 4 is common to the positive electrode plate 11 in that the identification mark 36 is formed in the projection range X of the exposed portion 32 while avoiding the joint portion 35 of the positive electrode lead 20. On the other hand, the positive electrode plate 11A is different from the positive electrode plate 11 in that the identification mark 36 is sandwiched by the joint portion 35 from above and below. That is, in the positive electrode plate 11A, the joint portions 35 are formed to be divided into two positions of the exposed portion 32, and the identification mark 36 is formed in a region sandwiched between the joint portions 35. In this case, since the region in which the identification mark 36 is formed is more strongly restrained by the positive electrode lead 20 having a high stiffness, the effect of reducing the deformation of the identification mark 36 is more remarkably obtained.

The positive electrode plate 11B illustrated in FIG. 5 is different from the positive electrode plates 11 and 11A in that a plurality of identification marks 36 are formed in one projection range X. On the other hand, each identification mark 36 is common to the identification mark 36 of the positive electrode plate 11A in that the identification mark 36 is sandwiched by the joint portion 35 from above and below. In the positive electrode plate 11B, the two identification marks 36 may be formed on each surface of the exposed portion 32 (four in total), or may be formed only on one of the first surface and the second surface. In this case, the identification mark 36 in a good state can be selected to read the mark. Note that the plurality of identification marks 36 are not limited to the same ones, and may be different from each other.

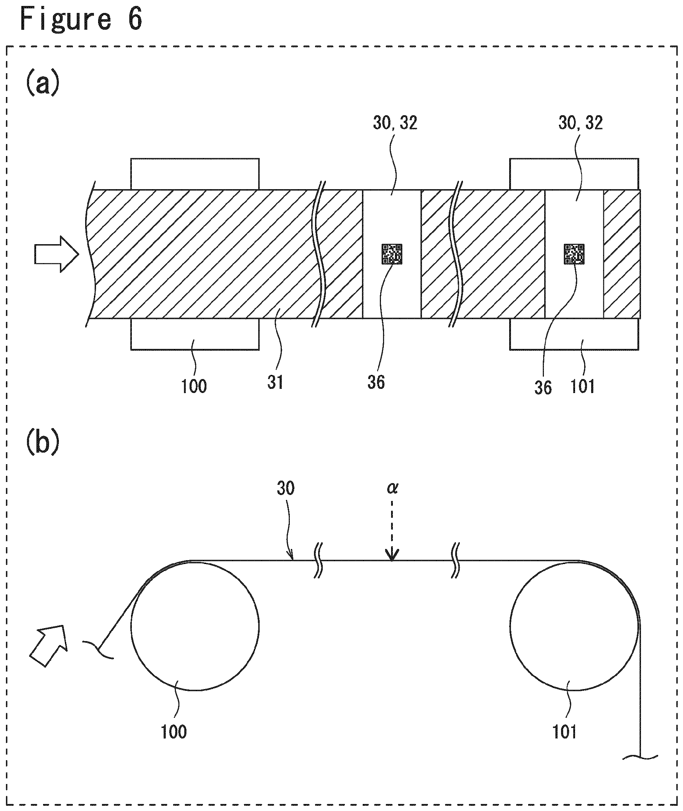

FIG. 6 illustrates one example of a process of forming the identification mark 36 on the exposed portion 32 of the positive electrode plate 11. As illustrated in FIG. 6, the identification mark 36 can be formed by laser marking by which the surface of the exposed portion 32 is irradiated with laser light. The laser marking is non-contact type marking with laser light, and enables high-speed marking. The laser light α is scanned on the exposed portion 32 in the longitudinal direction and the width direction of the positive electrode plate 11. A portion irradiated with the laser light α is discolored, or has a fine recess formed thereon, so that the identification mark 36 (two-dimensional code) is formed. The identification mark 36 is formed in a region serving as the projection range X after the positive electrode lead 20 is welded in a post process.

Although the identification mark 36 can be also formed before the positive electrode mixture layer 31 is formed, the identification mark 36 is preferably formed by irradiating the exposed portion 32 with the laser light α after the positive electrode mixture layer 31 and the exposed portion 32 are formed by intermittently applying the positive electrode mixture slurry to the elongated positive electrode core 30. The elongated positive electrode core 30 in which the positive electrode mixture layer 31 and the exposed portion 32 are formed is preferably conveyed to an irradiation spot of the laser light α, so that the identification marks 36 are continuously formed. In the example illustrated in FIG. 6, the positive electrode core 30 in a state in which a predetermined tension force is applied between conveyance rollers 100 and 101 is irradiated with the laser light α.

As described above, according to the cylindrical battery 10 having the above-described configuration, the deformation of the identification mark 36, 46 during the charging and discharging can be effectively reduced. This makes it difficult to cause a reading error of the identification mark 36, 46. Although a tension force acts on the exposed portion 32, 42 during the charging and discharging of the battery, in the projection range X, Y of the lead, the deformation can be reduced by the effect of the lead with a high stiffness. Therefore, it is conceivable that the deformation of the mark is unlikely to be deformed when the identification mark 36, 46 is formed in the projection range X, Y of the exposed portion 32, 42. In a case where the identification mark 36, 46 is covered by the tape 33, 43 and is formed on the first surface, the identification mark 36, 46 is further covered by the lead, and therefore, the identification mark 36, 46 can be effectively prevented from being deteriorated due to wear of the identification mark 36, 46, exposure of the mark to an electrolytic solution, or the like.

In the above-described embodiment, the identification mark is provided on each of the positive electrode plate and the negative electrode plate, but the identification mark may be provided only on the positive electrode plate or only on the negative electrode plate.

The present disclosure will be further described with the following embodiments.

Configuration 1: An electrode plate that has a core, and a mixture layer formed on the core, and is provided with an exposed portion where a surface of the core is exposed, the electrode plate comprising a lead joined to the exposed portion, and an identification mark, wherein at least a part of the identification mark is formed in a projection range in which an outline of the lead is projected, in the exposed portion.

Configuration 2: The electrode plate according to configuration 1, wherein the exposed portion includes a first surface to which the lead is to be joined, and a second surface opposite to the first surface, and the identification mark is formed on at least the first surface.

Configuration 3: The electrode plate according to configuration 1, wherein the exposed portion includes a first surface to which the lead is to be joined, and a second surface opposite to the first surface, and the identification mark is formed on at least the second surface.

Configuration 4: The electrode plate according to any one of configurations 1 to 3, wherein the identification mark is formed in a range not overlapping with a joint portion of the core and the lead in a thickness direction of the electrode plate.

Configuration 5: The electrode plate according to any one of configurations 1 to 4, wherein an entirety of the identification mark is formed in the projection range of the exposed portion.

Configuration 6: A battery comprising an electrode assembly comprising the electrode plate according to any one of configurations 1 to 5, and an exterior housing body that houses the electrode assembly.

### REFERENCE SIGNS LIST

10 Cylindrical battery, 11 Positive electrode plate, 12 Negative electrode plate, 13 Separator, 14 Electrode assembly, 16 Exterior housing can, 17 Sealing assembly, 18, 19 Insulating plate, 20 Positive electrode lead, 21 Negative electrode lead, 22 Grooved portion, 23 Internal terminal plate, 24 Lower vent member, 25 Insulating member, 26 Upper vent member, 27 Cap, 28 Gasket, 30 Positive electrode core, 31 Positive electrode mixture layer, 32, 42 Exposed portion, 33, 34, 43 Tape, 35, 45 Joint portion, 36, 46 Identification mark, 40 Negative electrode core, 41 Negative electrode mixture layer, 100, 101 Conveyance roller, X, Y Projection range

## Claims

1. An electrode plate that has: a core; and a mixture layer formed on the core, and is provided with an exposed portion where a surface of the core is exposed, the electrode plate comprising:
a lead joined to the exposed portion; and
an identification mark, wherein
at least a part of the identification mark is formed in a projection range in which an outline of the lead is projected, in the exposed portion.

2. The electrode plate according to claim 1, wherein
the exposed portion includes a first surface to which the lead is to be joined, and a second surface opposite to the first surface, and
the identification mark is formed on at least the first surface.

3. The electrode plate according to claim 1, wherein
the exposed portion includes a first surface to which the lead is to be joined, and a second surface opposite to the first surface, and
the identification mark is formed on at least the second surface.

4. The electrode plate according to claim 1, wherein
the identification mark is formed in a range not overlapping with a joint portion of the core and the lead in a thickness direction of the electrode plate.

5. The electrode plate according to claim 1, wherein
an entirety of the identification mark is formed in the projection range of the exposed portion.

6. A battery comprising:
an electrode assembly comprising the electrode plate according to any one of claims 1 to 5; and
an exterior housing body that houses the electrode assembly.
